# EUROPÄISCHE PATENTSCHRIFT

(11) **EP 0 747 546 B1**
(45) Veröffentlichungstag und Bekanntmachung des Hinweises auf die Patenterteilung: **12.04.2000**
(21) Anmeldenummer: 96107696.5
(22) Anmeldetag: 14.05.1996
(51) Int. Cl.: E03F 5/14, B01D 29/11

(54) **Vorrichtung und Verfahren zum Entfernen von Abfällen aus Wasser**
Device and method for removing waste from water
Appareil et procédé pour enlever les déchets de l'eau

(30) Priorität: 08.06.1995 DE 19520992
(43) Veröffentlichungstag der Anmeldung: 11.12.1996
(73) Patentinhaber: Premark FEG L.L.C., Wilmington, Delaware 19801 (US)
(72) Erfinder: Truetsch, Claus, 77933 Lahr (DE)
(74) Vertreter: Füchsle, Klaus, Dipl.-Ing.

(56) Entgegenhaltungen:
- EP-A- 0 564 870
- AT-B- 394 995
- DE-A- 3 716 434
- DE-A- 4 407 380

## Beschreibung

Die Erfindung betrifft eine Vorrichtung zum Entfernen von Abfällen, insbesondere Nahrungsmittelresten aus Wasser nach dem Oberbegriff des Patentanspruchs 1 sowie ein Verfahren zum Entwässern von Abfällen, insbesondere Nahrungsmittelresten, in einer Schneckenfördereinrichtung.

Vorrichtungen zum Entfernen von Abfällen, wie beispielsweise Speisereste, Nahrungsmittelreste, aber auch Abfälle wie Kunststoffteile, Aluminiumdeckel etc., aus Wasser kommen in Großkantinen, aber auch auf Schiffen zur Anwendung, in denen an verschiedenen Orten Zerkleinerer, sogenannte Pulper, angeordnet sind, welche die Abfälle zerkleinern. Die zerkleinerten Abfälle werden in Wasser aufgegeben und mit Wasser zu einer oder mehreren zentralen Schneckenfördereinrichtungen transportiert, welche die Abfälle entwässern, komprimieren, und in einen geeigneten Entsorgungsbehälter austragen.

Schneckenfördereinrichtungen sind in der Technik beispielsweise zum Entfernen von Rechen- und/oder Siebgut aus einem Gerinne strömender Flüssigkeit bekannt.

In der DE 37 16 434 wird eine Vorrichtung zum Entfernen von Rechen- und/oder Siebgut aus einem Gerinne strömender Flüssigkeit beschrieben. Ein schrägstehender, nicht angetriebener und teilweise in die Flüssigkeit eintauchender zylindermantelförmiger Rost umgibt eine aufwärts gerichtete Schnecke, die aus einer Welle und einer Förderwendel besteht. Die Schnecke ist vollständig von einem Spaltsieb umgeben und kann über ihre axiale Länge eine veränderliche Steigung aufweisen. Im Bereich des Austrages des Rechen- und/oder Siebgutes ist eine Antriebseinrichtung angeordnet, welche die Schnecke in Rotation versetzt. Die Schnecke kann fliegend gelagert sein, d.h. die Schnecke kann lediglich an der Antriebseinrichtung lagefixiert sein und mit Gleitlagerringen am inneren Umfang des Spaltsiebes versehen sein, welche eine Führung der Schnecke darstellen.

Die AT-B-394995 offenbart eine Vorrichtung zum Abscheiden und Verdichten von Feststoffen eines Flüssigkeits-Feststoffgemenges mit einer Schneckenfördereinrichtung, die eine Wassereinschwemmung oberhalb der Schnecke besitzt. Die Schneckenfördereinrichtung weist eine Förderschnecke mit einer Ganghöhe auf, die sich in Förderrichtung verringert. Ein Bodenbereich und eine Stirnwand des die Förderschnecke aufnehmenden Fördergehäuses ist siebartig ausgebildet.

Die europäische Patentanmeldung 0 564 870 beschreibt eine Schneckenfördereinrichtung zum Entfernen von Rechen- und/oder Siebgut aus einem Gerinne strömender Flüssigkeit. Am Ende der Förderschnecke ist die angetriebene Welle frei von einer Förderwendel, so daß sich eine Kompaktierzone bildet, in der das Abscheidegut unter Verwendung eines Gegendruckelements kompaktiert werden kann. Die Förderwendel der Schneckenfördereinrichtung kann bereichsweise unterschiedliche Wendelsteigungen besitzen und ist teilweise von einem Spaltsieb umgeben.

Die EP 0 564 870 A1 bildet den Oberbegriff der Ansprüche 1 und 16 unten.

Es ist das der vorliegenden Erfindung zugrundeliegende Problem (Aufgabe), eine Vorrichtung und ein Verfahren der eingangs genannten Art so zu verbessern, daß sie einerseits mit einem hohen Wasserdurchsatz betrieben werden kann, andererseits eine gute Abreinigung des Wassers erzielt wird. Des weiteren soll ein vorgegebener, hoher Entwässerungsgrad erzielbar sein.

Die Lösung dieser Aufgabe erfolgt durch eine Vorrichtung mit den Merkmalen des Anspruches 1 sowie durch ein Verfahren mit den Merkmalen des Anspruches 16.

Die Vorrichtung zeichnet sich insbesondere dadurch aus, daß die Schnecke vollständig oder teilweise von einem Spaltsieb umgeben ist; das Spaltsieb bereichsweise unterschiedliche Maschenweiten besitzt; und ein Gegendruckelement an einer ersten Stirnseite der im wesentlichen zylinderförmigen Schneckenfördereinrichtung an der Austrittsseite der Abfälle aus der Schneckenfördereinrichtung angeordnet ist.

Durch den Einsatz eines Spaltsiebes, das die Schnecke nur teilweise umgibt, kann das oberhalb der Schnecke eingeschwemmte Wasser mit hoher Geschwindigkeit in die Vorrichtung eingeleitet werden und die Schneckenfördereinrichtung durch das Spaltsieb mit einer bereichsweise höheren Maschenweite verlassen. Im Bereich geringen Druckes ist ein Spaltsieb mit größerer Maschenweite vorteilhaft, damit ein hoher Wasserdurchfluß erzielt wird. Dieser Bereich geringeren Druckes befindet sich in dem Abschnitt der Schnecke, in dem die Wendelsteigung größer ist.

Werden die Abfälle nun durch die Schneckenfördereinrichtung in einen Bereich der Schnecke transportiert, in dem die Wendelsteigung geringer ist, so führt dies zu einer Komprimierung der transportierten Abfälle und damit zu einer Erhöhung des Druckes. Durch das Vorsehen einer unterschiedlichen Maschenweite in dem Bereich, insbesondere einer geringeren Maschenweite, kann weiterhin eine gute Entwässerung der Abfälle sichergestellt werden, ohne daß der Abreinigungsgrad des Wassers durch den verstärkten Durchtritt der unter Druck stehenden Abfälle durch das Spaltsieb auftritt.

Ein erhöhter Druck in einem bestimmten Bereich der Schneckenfördereinrichtung setzt voraus, daß ein Gegendruckelement vorhanden ist, welches diesen Bereich gegen die Umgebung abgrenzt und einem Druckausgleich entgegenwirkt.

Der Antrieb der Schnecke erfolgt durch eine Antriebseinrichtung, die in der Nähe einer zweiten Stirnseite der Schneckenfördereinrichtung angeordnet ist. Die Anordnung der Antriebseinrichtung am unteren Teil der Schnecke, das heißt im Bereich der an die Seihzone angrenzenden Stirnseite, besitzt den Vorteil, daß die fliegend gelagerte Schnecke leicht nach oben entnommen werden kann, wenn dies aus Gründen einer Reparatur, der Reinigung oder aus anderen Gründen erforderlich ist. Wenn die Welle der Schnecke weiterhin in ein Aufnahmeelement einsteckbar ist, das mit der Antriebseinrichtung in Drehmomentübertragung steht, kann der Ausbau der Schnecke rein manuell, das heißt ohne Verwendung von Werkzeugen, durchgeführt werden.

Das Verfahren nach Anspruch 16 zeichnet sich insbesondere dadurch aus, daß die mit Wasser transportierten Abfälle auf einen ersten Bereich der Schneckenfördereinrichtung eingeleitet werden, die Abfälle auf einem Spaltsieb mit einer größeren Maschenweite aufgefangen werden, die Abfälle anschließend in axialer Richtung der Schneckenfördereinrichtung durch die Drehbewegung der Schnecke mit großer Steigung der Schneckenwendel und unter gleichzeitiger Entwässerung der Abfälle transportiert werden, bis die Abfälle in einen zweiten Bereich der Schneckenfördereinrichtung mit kleiner Steigung der Schneckenwendel und kleinerer Maschenweite des Spaltsiebes gelangen, wodurch eine Komprimierung und Entwässerung der Abfälle im zweiten Bereich der Schneckenfördereinrichtung stattfindet, woraufhin die Abfälle schließlich in einem Entsorgungsbehälter ausgetragen werden.

Das erfindungsgemäße Verfahren zum Entwässern von Abfällen wird bevorzugt in einer Vorrichtung nach Anspruch 1 durchgeführt, bei der bereichsweise unterschiedliche Wendelsteigungen sowie bereichsweise unterschiedliche Maschenweiten bestehen.

Weitere bevorzugte Ausführungsformen sind durch die übrigen Unteransprüche gekennzeichnet.

So kann nach Anspruch 2 die Schneckenfördereinrichtung drei in Transportrichtung der Abfälle nacheinander angeordnete Bereiche umfassen: eine Seihzone mit großer Maschenweite des Spaltsiebes, eine Vorpreßzone mit geringer Maschenweite des Spaltsiebes und ein Preßteil in der Nähe des Gegendruckelementes. Durch diese oben genannte Anordnung der verschiedenen Bereiche in Transportrichtung der Abfälle wird eine bestmögliche Entwässerung und Komprimierung der Abfälle erreicht. Indem, wie in Anspruch 3 beschrieben wird, die Wendelsteigung der Schnecke in der Vorpreßzone geringer ist als die Wendelsteigung der Schnecke in der Seihzone, wird eine bestmögliche Abstimmung der Komprimierung der Abfälle und der Siebmaschenweite erreicht, damit bei höheren Drücken die Abfälle nicht in verstärktem Maß durch die Maschen des Spaltsiebes herausgedrückt werden.

Nach einer weiteren Ausführungsform umgibt das Spaltsieb die Schnecke in der Seihzone nur teilweise und in der Vorpreßzone vollständig. Hierdurch wird ein unerwünschter Druckaufbau in der Seihzone vermieden, indem die Abfälle im Falle einer hohen lokalen Ansammlung nach oben ausweichen können, ohne daß es zu einer Volumenverringerung und dem damit verbundenen Druckaufbau kommt.

Nach einer weiteren Ausführungsform ist die Schnecke im Bereich der Seihzone ganz oder teilweise seelenlos als Wendel ohne Schneckenwelle ausgeführt. Diese Ausführung der Schnecke besitzt den Vorteil, daß bei einer unerwünscht hohen lokalen Ansammelung von Abfällen diese durch den freien Querschnitt im Inneren der Wendel in den nachfolgenden Wendelgang hindurchtreten können und somit eine gleichmäßige Fracht an Abfällen erreicht werden kann, wodurch im Bereich der nachfolgenden Vorpreßzone ein gleichmäßiger Druck und damit eine gleichmäßige Entwässerung in jedem Bereich der Schnecke erreicht wird.

Nach einer weiteren Ausführungsform kann die Schnecke durch das Spaltsieb und das Gegendruckelement vollständig ummantelt sein, wobei das Wasser mit Abfällen durch einen Stutzen in der Mantelfläche der Schneckenfördereinrichtung einleitbar ist. Diese Ausführungsform bietet sich an, wenn ein erhöhter Druck in der gesamten Schneckenfördereinrichtung vorhanden ist oder erforderlich ist. Durch die vollständige Ummantelung der Schnecke auch in der Seihzone tritt gereinigtes Wasser am gesamten Umfang aus.

Nach einer bevorzugten Ausführungsform besitzen die Spaltsiebe einen im wesentlichen trapezförmigen Spaltquerschnitt, wobei sich die Öffnungen des Spalts jeweils in Radialrichtung erweitern. Diese spezielle Formgebung der Spaltsiebe verhindert ein Verstopfen der Öffnungen, weil die Abfälle, die durch die am Innenumfang der Spaltsiebe angeordneten Öffnungen hindurchgetreten sind, in den sich nun erweiternden Spaltquerschnitten einfacher abtransportiert werden können.

Gemäß einer weiteren Ausführungsform ist das Gegendruckelement eine Klappe, die gegen die zweite Stirnseite der Schneckenfördereinrichtung vorspannbar ist und in Richtung von der Stirnseite weg schwenkbar befestigt ist. Die Verwendung einer Klappe als Gegendruckelement bietet sich dann an, wenn die Abfälle einen höheren Wassergehalt besitzen dürfen. Dies trifft beispielsweise dann zu, wenn die Abfälle im Entsorgungsbehälter in einem pumpfähigen Zustand gehalten werden sollen, damit sie in einen Verbrennungsofen, oder in einen Aufbewahrungsbehälter eingeführt werden können.

Nach einer weiteren Ausführungsform kann das Gegendruckelement ein Preßkonus sein, der in die Schneckenfördereinrichtung von der ersten Stirnseite her einschiebbar ist und der nach Überwinden einer einstellbaren Vorspannkraft in Axialrichtng der Schneckenfördereinrichtung verschiebbar ist. Die Verwendung eines Preßkonus bietet den Vorteil eines sehr hohen Entwässerungsgrades. Wird dieser Preßkonus mit einer einstellbaren Vorspannkraft beaufschlagt, so kann dieser Entwässerungsgrad eingestellt werden und damit der Wassergehalt der in einen Entsorgungsbehälter ausgetragenen Abfälle den Erfordernissen einer weiteren Verarbeitung angepaßt werden.

Hierzu kann auch eine automatisierte Version des Gegendruckelementes in Form eines motorisch-druckabhängig steuerbaren Preßkonus zur Anwendung gelangen. Dabei ist der Preßkonus mit einem hydraulisch oder pneumatisch betätigbaren Hubzylinder verbunden, der wiederum mit einer Motoreinrichtung betätigbar ist. Somit kann der Preßkonus in Abhängigkeit der ausgetragenen Abfallmenge, aber auch beim Vorsehen entsprechende Sensoreinrichtungen in Abhängigkeit vom Druck im Preßteil gesteuert werden. Besteht beispielsweise die Gefahr einer Verblockung, so kann der Preßkonus vollständig aus der ersten Stirnseite der Schneckenfördereinrichtung herausgesteuert werden, der möglicherweise eine Verstopfung hervorrufende Abfallpfropfen ausgetragen werden und der Preßkonus anschließend wieder mit vorgegebener Vorspannkraft in die erste Stirnseite der Schneckenfördereinrichtung eingeschoben werden.

Nachfolgend wird die Erfindung anhand der beigefügten Zeichnungen näher erläutert. Es zeigen:
- Fig. 1: eine schematische Ansicht der Vorrichtung zum Entfernen von Abfällen aus Wasser mit einer Schneckenfördereinrichtung;
- Fig. 2: einen Preßkonus zur Verwendung in der erfindungsgemäßen Schneckenfördereinrichtung; und
- Fig. 3: einen Teil der Schneckenfördereinrichtung unter Verwendung einer Klappe als Gegendruckelement;
- Fig. 4: eine Schnecke, die teilweise seelenlos ausgeführt ist.

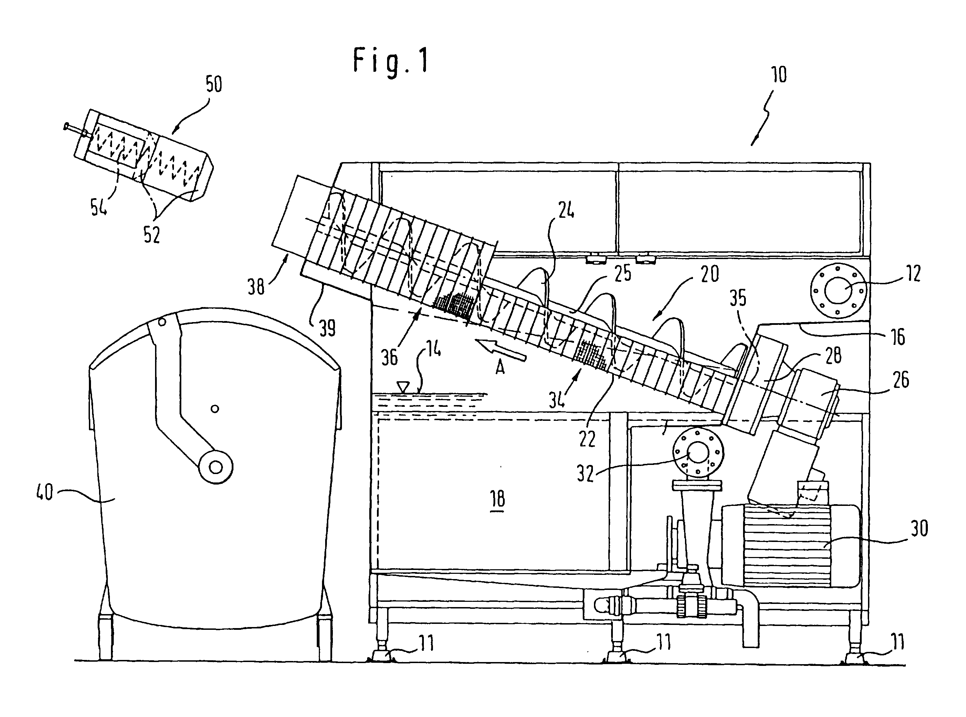

Fig. 1 zeigt die Vorrichtung zum Entfernen von Abfällen aus Wasser mit einer Schneckenfördereinrichtung, die allgemein mit Referenznummer 10 bezeichnet wird. Die mit dem Wasser transportierten Abfälle werden durch den Einlaufstutzen 12 in die Vorrichtung 10 eingespeist. Der Einlaufstutzen 12 ist oberhalb der Schneckenfördereinrichtung 20 und diese wiederum im wesentlichen oberhalb des Wasserpegels 14 angeordnet. Durch eine Trennwand 16, die auch in Form eines Trennsiebes ausgeführt sein kann, ist der Einlaufbereich vom Wassertank 18 für abgereinigtes Wasser so abgetrennt, daß das mit den Abfällen zugeführte Wasser durch das Spaltsieb 22 hindurch oder auch durch seitlich angeordnete, schräg angebrachte Siebe in den Wassertank 18 gelangen kann. Vom Wassertank 18 aus wird das Brauchwasser mittels einer Pumpe 30 zum Austrittsstutzen 32 gefördert und von dort in Kreislauf zu einem oder mehreren Zerkleinerern, sogenannten Pulpern, befördert.

In der Vorrichtung 10 wird der Wasserpegel 14 in einem vorgegebenen Bereich geregelt. Hierzu wird der Pegel erfaßt, beispielsweise durch einen nicht dargestellten Schwimmer, und der Betrieb der Pumpe bei Unterschreiten eines minimalen Wasserstandes gestoppt, wodurch ein Heißlaufen der Pumpe vermieden werden soll. Durch das Vorsehen eines Überlaufs (nicht dargestellt) wird das Überschreiten eines maximal tolerierbaren Wasserpegels vermieden.

Die Vorrichtung 10 ist in kompakter Weise in einem rechteckigen Behälter angeordnet, der, insbesondere bei Verwendung der Vorrichtung 10 auf einem Schiff, durch besondere Einrichtungen gegen Vibrationen geschützt ist. Hierzu können beispielsweise vibrationshemmende Füße 11 Verwendung finden.

Die Schneckenfördereinrichtung ist schräg aufwärts gerichtet angeordnet und mit einer Schnecke 24 versehen, die in einer Richtung um ihre Achse 26 rotiert, so daß die zu entwässernden und zu komprimierenden Abfälle in der graphischen Darstellung in Fig. 1 von rechts nach links aufwärts gerichtet gefördert werden. Die dargestellte Schneckenfördereinrichtung 20 besteht aus drei Teilabschnitten, einer Seihzone 34, einer Vorpreßzone 36 sowie einem Preßteil 38. In der Seihzone 34 ist das Spaltsieb 22 bevorzugt nur entlang der unten liegenden Hälfte des die Schnecke 24 umschreibenden Zylindermantels angeordnet. Das Spaltsieb 22 besitzt in diesem Bereich 34 eine größere Maschenweite, die zwischen 1,5 mm und 3,5 mm, vorzugsweise um 2,5 mm liegt. In der Vorpreßzone 36 hingegen ist die Schnecke 24 vollständig von einem Spaltsieb 22 umgeben. Das Spaltsieb 22 in der Vorpreßzone 36 besitzt eine geringere Maschenweite als das Spaltsieb in der Seihzone 34, die im Bereich zwischen 0,5 mm und 2 mm liegt, bevorzugt etwa 1,5 mm ist.

Auch die Wendelsteigungen der Schnecke 24 unterscheiden sich in der Seihzone 34 sowie der Vorpreßzone 36. So ist die Wendelsteigung der Schnecke 24 in der Vorpreßzone 36 geringer.

Gelangen Abfälle zusammen mit dem als Transportmedium dienenden Wasser durch den Einlaufstutzen in die Vorrichtung 10, so werden diese in das Spaltsieb 22 im Bereich der Seihzone gespült. Das Spaltsieb der Seihzone liegt im wesentlichen oberhalb des Wasserpegels 14 und die Abfälle werden vom Spaltsieb 22 zurückgehalten, während das Wasser durch dieses hindurchtreten kann. Gleichzeitig werden die vom Spaltsieb zurückgehaltenen Abfälle durch die Bewegung der Schneckenwendel in Richtung des Pfeiles A transportiert. Hierdurch streifen die äußeren Umfangsseiten der Schnecke 24 direkt an der der Schnecke 24 zugewandten Innenwand des Spaltsiebes 22 entlang. Durch den Transport der Abfälle in Förderrichtung der Schnecke werden diese einerseits komprimiert, andererseits weiter entwässert.

Werden sehr große Mengen an Abfällen durch den Einlaufstutzen 12 auf das Spaltsieb 22 transportiert, so können diese zeitlichen Mengenunterschiede dadurch aufgefangen werden, daß das Spaltsieb 22 nur am unteren Umfang der Schnecke im Bereich der Seihzone 34 angeordnet ist. Hierdurch können sich Abfälle hoch auftürmen, es kommt zu keinem Druckaufbau in der Seihzone und damit einer Verminderung der Brauchwasserqualität durch ein erhöhtes Durchpassieren von Feststoffanteilen durch das Spaltsieb. Weiterhin können die Abfälle von einem Schneckengang in den nächstfolgenden übertreten und somit einen Ausgleich zeitlicher Mengenunterschiede bewirken.

Anschließend werden die Abfälle in die Vorpreßzone transportiert, in der sich aufgrund der geringeren Steigung der Schneckenwendel und der damit einhergehenden Verringerung des Volumendurchsatzes ein erhöhter Druck einstellt.

Damit aufgrund des erhöhten Druckes die auch in diesem Bereich stattfindende Entwässerung der Abfälle nicht zu einer Verminderung der Brauchwasserqualität führt, ist in diesem Bereich die Maschenweite des Spaltsiebs geringer als diejenige in der Seihzone. Die Schnecke ist in der Vorpreßzone vollständig vom Spaltsieb ummantelt, so daß sich ein erhöhter Druck in der Vorpreßzone 36 bilden kann. Aufgrund der geringeren Maschenweite des Spaltsiebs 22 in der Vorpreßzone 36 können keine Abfälle in das Brauchwasser gelangen, die bereits in der Seihzone am Durchtritt gehindert wurden, nun aber beim Vorhandensein eines erhöhten Druckes durch die Maschen des Spaltsiebes hindurchtreten könnten. Somit hält eine veränderte und abgestimmte Maschenweite des Spaltsiebes die Qualität des Brauchwassers in beiden Bereichen der Schneckenfördereinrichtung konstant.

Im Bereich der Vorpreßzone 36, die aus dem kastenförmigen Behälter der Vorrichtung 10 herausragt, ist das Spaltsieb von einer zusätzlichen Ablaufrinne 39 umgeben, die das in diesem Bereich austretende Wasser in dem Behälter in Richtung des Abwasserreservoirs zurückführt.

Schließlich gelangen die vorgepreßten Abfälle in das Preßteil 38, das nicht von der Schnecke 24 durchdrungen wird. Die Abfälle werden alleine durch den Druckaufbau der nachfolgend mit der Schnecke 24 antransportierten Abfälle weitergefördert und bilden einen stark verdichteten Pfropf, der schließlich in einen Entsorgungsbehälter 40 ausgetragen wird.

Der gewünschte Druck im Preßteil 38 kann durch das Vorsehen eines Gegendruckelements 50 eingestellt werden, wobei hier verschiedene Ausführungsformen denkbar sind, auf die zu einem späteren Zeitpunkt eingegangen wird.

Die Schnecke 24 besitzt eine Schneckenachse 35, die von einer Motoreinrichtung 26 mit einer möglicherweise zwischengeschalteten Getriebestufe angetrieben wird. Die Motoreinrichtung 26 überträgt die Rotation auf ein Aufnahmeelement 28, das beispielsweise in Form eines weiblichen Achtkantaufnahmestückes ausgebildet sein kann und ein entsprechend geformtes männliches Achtkantgegenstück der Schneckenwelle 25 aufnimmt.

Im Bereich der Vorpreßzone 36 ist die Schnecke 24 an ihrer Umfangsseite mit einigen Gleitstücken (nicht dargestellt) versehen, die eine fliegende Lagerung der Schnecke am inneren Umfang des Spaltsiebes 22 ermöglichen. Die Gleitstücke können auch dergestalt am Umfang der Schnecke 24 angeordnet sein, daß die Stirnseiten der Schneckenwendeln vollständig von Gleitstücken eingefaßt sind. Eine andere Möglichkeit besteht darin, die Schnecke 24 vollständig oder teilweise aus Kunststoff auszuführen.

Aufgrund der oben beschriebenen einfachen Lagerung der Welle in einem Aufnahmestück an dem dem unten angeordneten Motor 26 zu gerichteten Ende der Schneckenwelle 25 und der fliegenden Lagerung der Schnecke 24 im Bereich der Vorpreßzone 36 kann die gesamte Schnecke ohne Schwierigkeiten entnommen werden, indem das Preßteil von der Vorrichtung 10 gelöst wird und die gesamte Schnecke nach oben in Axialrichtung der Schnecke entnommen wird. Dadurch kann die Schnecke einfach gereinigt werden, was aufgrund der Geruchsbelästigung bei längerem Stillstand der Vorrichtung 10 von großer Wichtigkeit ist.

Das Gegendruckelement 50 kann je nach gewünschter Restfeuchte des transportierten Gutes auf verschiedene Weisen ausgeführt sein. In Fig. 1 dargestellt ist ein Preßkonus 52, dessen vordere Stirnseite in das Preßteil 38 eindringt.

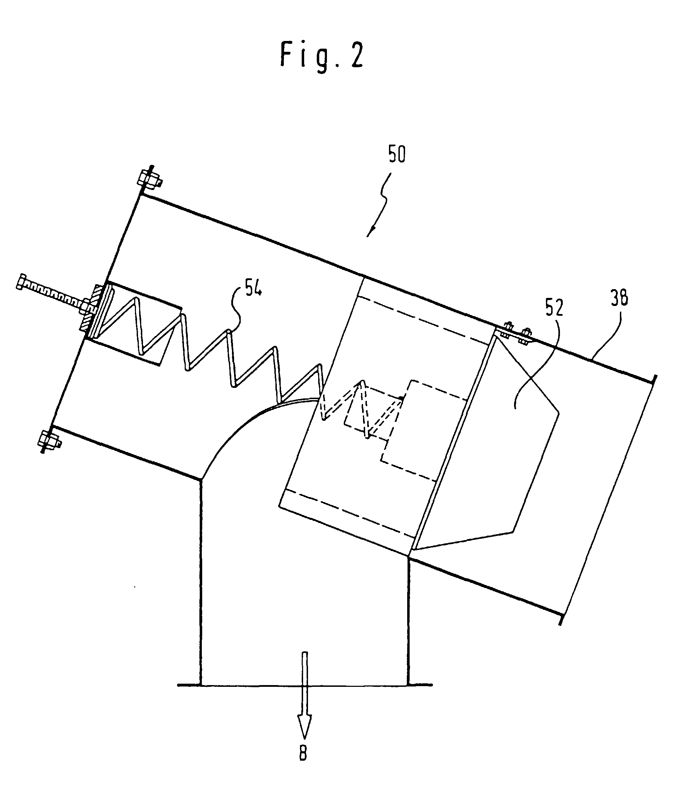

In Fig. 2 ist ein Preßkonus 52 zur Verwendung in der erfindungsgemäßen Schneckenfördereinrichtung dargestellt. Der Preßkonus 52 wird mit einer Feder 54 mit einer vorgegebenen Vorspannkraft im Preßteil 38 gehalten und weicht nur nach dem Überwinden dieser vorgegebenen Vorspannkraft in axialer Richtung zurück, wodurch die im Preßteil 38 befindlichen Abfälle in Pfeilrichtung B in den Entsorgungsbehälter, beispielsweise einen Container oder Kunststoffsäcke, ausgetragen werden können. Die konstruktive Befestigung des Preßkonus und der Feder wurde nur beispielhaft gewählt und ist in beliebiger Weise denkbar.

Die Verwendung eines Preßkonus 52 besitzt den Vorteil, daß die Bewegung der im Preßteil 38 befindlichen Abfälle entlang der Umfangsfläche des Preßkonus 52 zu einer sehr weitreichenden Entwässerung der Abfälle führt. Daher ist ein Preßkonus immer dann geeignet, wenn ein hoher Entwässerungsgrad des zu trocknenden Gutes erwünscht ist.

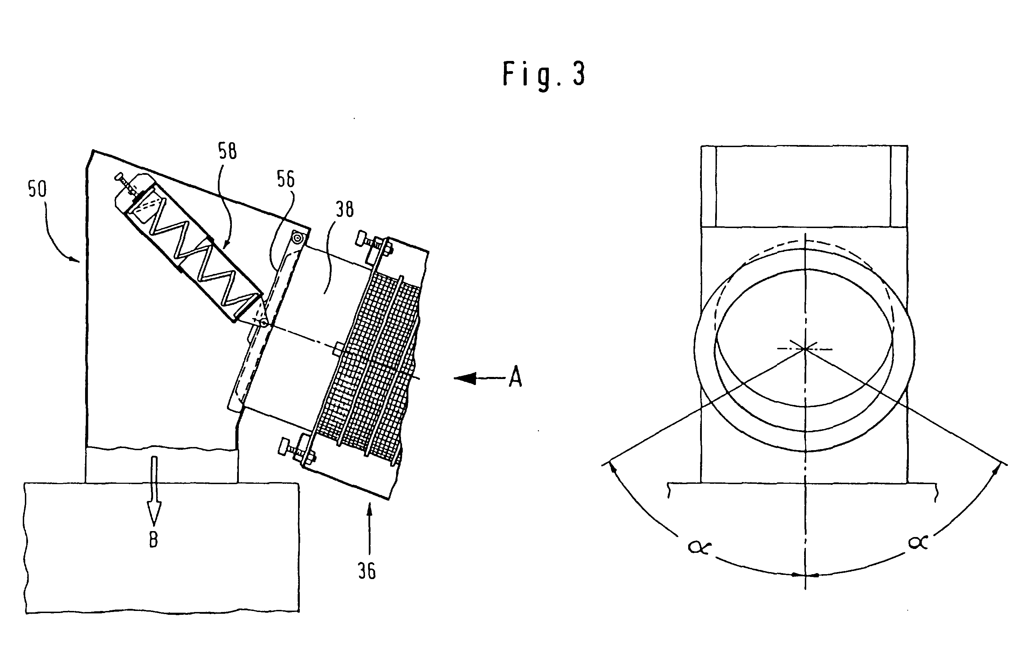

Eine andere Möglichkeit, das Gegendruckelement 50 auszuführen, ist in Fig. 3 dargestellt.

In Fig. 3 ist das Preßteil 38 der Schneckenfördereinrichtung 20 und ein Teil der Vorpreßzone 36 dargestellt. Wie aus Fig. 3 deutlich wird, besteht das Gegendruckelement 50 aus einer Klappe 56, die schwenkbar so angeordnet ist, daß sie die öffnungsseitige Stirnseite des Preßteiles 38 verschließen kann. Die Klappe 56 wird in geeingeter Weise, z.B. durch eine Federeinrichtung 58 oder durch einen Hydraulik- oder Pneumatikzylinder, gegen die öffnungsseitige Stirnseite des Preßteiles 38 vorgespannt, so daß es nur nach Überwindung dieser einstellbaren Vorspannkraft möglich ist, die Klappe 56 zu öffnen. Mit einer Öffnung der Klappe 56 kann der komprimierte Pfropfen der im Preßteil befindlichen Abfälle in in Pfeilrichtung B in einen geeigneten Entsorgungsbehälter abgeführt werden.

Die Verwendung einer Klappe 56 führt im allgemeinen zu einem Gut, dessen Entwässerungsgrad geringer ist als dies bei der Verwendung eines Preßkonus der Fall ist. Daher findet die Ausführungsform des Gegendruckelementes 50 und die Verwendung einer Klappe 56 bevorzugt dann Verwendung, wenn der Feststoff in dem Entsorgungsbehälter 40 in einem pumpfähigen Zustand gehalten werden soll, damit er in einer geeigneten Weise, beispielsweise in einem Verbrennungsofen, weiterverarbeitet werden kann.

Wie aus der Ansicht A in Fig. 3 deutlich wird, kann das Gegendruckelement 50 gedreht werden, wodurch eine beliebige Winkelanordnung erzielbar ist. Vorzugsweise ist das Gegendruckelement bezüglich der Mittelstellung um einen Winkel a von etwa 60 Grad in jede Richtung drehbar. Hierdurch läßt sich eine kombinierte Behälter- und Sackentleerung erzielen.

Die drehbare Anbringung des Gegendruckelements ist nicht auf die Ausführungsform einer Gegendruckplatte beschränkt, sondern in gleicher Weise bei der Verwendung eines Preßkonus oder eines beliebigen anderen Gegendruckelements vorteilhaft.

Eine weitere Möglichkeit der Ausbildung des Gegendruckelements 50 besteht darin, daß ein motorisch-druckabhängig gesteuerter Preßkonus verwendet wird. Ein derartiger Preßkonus kann völlig aus dem Preßteil 38 der Schneckenfördereinrichtung 20 herausfahren, wenn der Druck im Preßteil zu groß wird. Hierzu kann eine zusätzliche motorische Einheit verwendet werden, die beispielsweise über hydraulisch betätigbare Hubzylinder mit dem Preßkonus verbunden ist und dessen Bewegung zielgerichtet steuern kann.

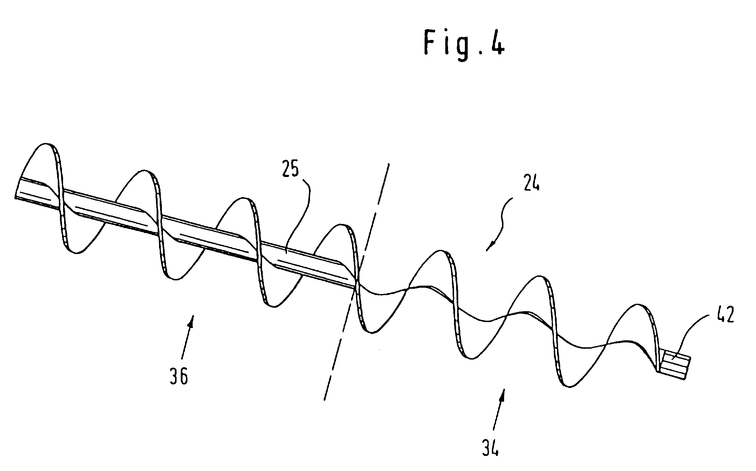

In Fig. 4 ist eine Schnecke 24 dargestellt, die teilweise seelenlos ausgeführt ist. Wie durch die gestrichelte Linie angedeutet ist, erstreckt sich der seelenlose Teil teilweise, bevorzugt ganz, über die Seihzone 34 der dazugehörigen Schneckenfördereinrichtung. Die Ausbildung einer im Bereich der Seihzone seelenlosen Schnecke besitzt den Vorteil, daß die Abfälle von einem Gewindegang der Wendel in den oder die angrenzenden Gewindegänge der Wendel übertreten können. Hierdurch kann ein bezüglich der Zeit stark schwankender Eintrag an Abfällen ausgeglichen werden. Die Schnecke ist lediglich an ihrem axialen Ende mit einem Aufnahmeelement 42 versehen, in welches das Motordrehmoment eingeleitet wird.

## Patentansprüche

1. Vorrichtung zum Entfernen von Abfällen aus Wasser mit einer Schneckenfördereinrichtung (10), umfassend:
- eine Schnecke (24), die bereichsweise unterschiedliche Wendelsteigungen besitzt; und
- fliegend gelagert ist; sowie
- vollständig oder teilweise von einem Spaltsieb (22) umgeben ist;
- ein Gegendruckelement (50), das an einer ersten Stirnseite der im wesentlichen zylinderförmigen Schneckenfördereinrichtung an der Austrittsseite der Abfälle aus der Schneckenfördereinrichtung angeordnet ist;
dadurch **gekennzeichnet,** daß
- das Spaltsieb (22) bereichsweise unterschiedliche Maschenweiten besitzt; wobei die Maschenweiten im Bereich größerer Wendelsteigungen größer sind; und
- eine Antriebseinrichtung (30) für die Schnecke in der Nähe einer zweiten Stirnseite der Schneckenfördereinrichtung angeordnet ist.

2. Vorrichtung nach Anspruch 1,
dadurch **gekennzeichnet,** daß die Schneckenfördereinrichtung (3) in Transportrichtung der Abfälle nacheinander angeordnete Bereiche umfaßt:
- eine Seihzone mit großer Maschenweite des Spaltsiebes;
- eine Vorpreßzone mit geringer Maschenweite des Spaltsiebes; und
- ein Preßteil in der Nähe des Gegendruckelementes.

3. Vorrichtung nach Anspruch 2,
dadurch **gekennzeichnet,** daß
die Wendelsteigung der Schnecke in der Vorpreßzone geringer ist als die Wendelsteigung der Schnecke in der Seihzone.

4. Vorrichtung nach Anspruch 2 oder 3,
dadurch **gekennzeichnet,** daß
das Spaltsieb die Schnecke in der Seihzone nur teilweise umgibt und in der Vorpreßzone vollständig umgibt.

5. Vorrichtung nach Anspruch 2, 3 oder 4,
dadurch **gekennzeichnet,** daß
die Schnecke im Bereich der Seihzone ganz oder teilweise seelenlos als Wendel ohne Schneckenwelle ausgeführt ist.

6. Vorrichtung nach Anspruch 1,
dadurch **gekennzeichnet,** daß
die Welle der Schnecke in ein Aufnahmeelement einsteckbar ist, das mit der Antriebseinrichtung in Drehmomentübertragung steht.

7. Vorrichtung nach Anspruch 6,
dadurch **gekennzeichnet,** daß
die Schnecke von der ersten Stirnseite aus manuell entnehmbar ausgeführt ist.

8. Vorrichtung nach Anspruch 1,
dadurch **gekennzeichnet,** daß
die Schnecke durch das Spaltsieb und das Gegendruckelement vollständig ummantelt ist, wobei das Wasser mit Abfällen durch einen Stutzen an der Mantelfläche der Schneckenfördereinrichtung einleitbar ist.

9. Vorrichtung nach Anspruch 1,
dadurch **gekennzeichnet,** daß
das Spaltsieb einen im wesentlichen trapezförmigen Spaltquerschnitt besitzt, wobei sich die Öffnungen des Spaltsiebes in radialer Richtung erweitern.

10. Vorrichtung nach Anspruch 1,
dadurch **gekennzeichnet,** daß
das Gegenduckelement um die Längsachse der im wesentlichen zylinderförmigen Schneckenfördereinrichtung drehbar angeordnet ist.

11. Vorrichtung nach Anspruch 10,
dadurch **gekennzeichnet,** daß
das Gegendruckelement eine Klappe ist, die gegen die erste Stirnseite der Schneckenfördereinrichtung vorspannbar ist und in Richtung von der Stirnseite weg schwenkbar befestigt ist.

12. Vorrichtung nach Anspruch 10,
dadurch **gekennzeichnet,** daß
das Gegendruckelement ein Preßkonus ist, der in die Schneckenfördereinrichtung von der ersten Stirnseite her einschiebbar ist.

13. Vorrichtung nach Anspruch 12,
dadurch **gekennzeichnet,** daß
der Preßkonus nach dem Überwinden einer einstellbaren Vorspannkraft in Axialrichtung der Schneckenfördereinrichtung verschiebbar ist.

14. Vorrichtung nach Anspruch 12,
dadurch **gekennzeichnet,** daß
der Preßkonus motorisch-druckabhängig steuerbar ist.

15. Vorrichtung nach Anspruch 14,
dadurch **gekennzeichnet,** daß
der Preßkonus mit einem hydraulisch oder pneumatisch betätigbaren Hubzylinder verbunden ist.

16. Verfahren zum Entwässern von Abfällen in einer Schneckenfördereinrichtung,
umfassend die folgenden Schritte:
- Einleiten der mit Wasser transportierten Abfälle auf einem ersten Bereich der Schneckenfördereinrichtung (10);
- Auffangen der Abfälle auf einem Spaltsieb (22);
- Transport der Abfälle in axialer Richtung der Schneckenfördereinrichtung (10) durch die Drehbewegung der Schnecke (24) unter gleichzeitiger Entwässerung der Abfälle;
- Komprimierung und Entwässerung der Abfälle in der Schneckenfördereinrichtung (10); und
- Austrag der Abfälle in einen Entsorgungsbehälter;
dadurch **gekennzeichnet,** daß
- die Abfälle auf einem Spaltsieb (22) mit einer großen Maschenweite aufgefangen werden;
- der Transport der Abfälle in axialer Richtung der Schneckenfördereinrichtung (10) zunächst in einem Bereich der Schnecke (24) mit großer Steigung der Schneckenwendel unter gleichzeitiger Entwässerung der Abfälle und anschließend in einem zweiten Bereich der Schneckenfördereinrichtung (10) mit kleiner Steigung der Schneckenwendel und kleiner Maschenweite des Spaltsiebes (22) erfolgt; und
- die Abfälle in ein Preßteil gefördert werden, das nicht von der Schnecke durchdrungen ist.

## Claims

1. Device for the removal of waste materials from water with a screw conveyor device (10) comprising:
- a screw (24) which in sections possesses different helical pitches; and
- is mounted in cantilevered manner; and
- is surrounded completely or in part by a slot sieve (22);
- a counterpressure member (50) which is arranged on a first end face of the substantially cylindrical screw conveyor device at the exit end of the waste materials from the screw conveyor device;
characterised in that
- in sections the slot sieve (22) possesses different mesh sizes, the mesh sizes being larger in the region of larger helical pitches, and
- a drive device (30) for the screw is arranged in the vicinity of a second end face of the screw conveyor device.

2. Device according to Claim 1,
characterised in that the screw conveyor device (3) comprises regions arranged one behind the other in the transport direction of the waste materials:
- a straining zone with a large mesh size for the slot sieve,
- a primary pressing zone with a small mesh size for the slot sieve, and
- a compression part in the vicinity of the counterpressure member.

3. Device according to Claim 2,
characterised in that the helical pitch of the screw in the primary pressing zone is smaller than the helical pitch of the screw in the straining zone.

4. Device according to Claim 2 or 3,
characterised in that the slot sieve surrounds the screw only in part in the straining zone and surrounds it completely in the primary pressing zone.

5. Device according to Claim 2, 3 or 4,
characterised in that in the region of the straining zone the screw is constructed in whole or in part without a core as a helix without a screw shaft.

6. Device according to Claim 1,
characterised in that the shaft of the screw can be plugged into a receiving member which transmits torque to the drive device.

7. Device according to Claim 6,
characterised in that the screw is constructed to be manually removable from the direction of the first end face.

8. Device according to Claim 1,
characterised in that the screw is completely encased by the slot sieve and the counterpressure member, it being possible to introduce the water with waste materials through a pipe connection on the outside casing of the screw conveyor device.

9. Device according to Claim 1,
characterised in that the slot sieve possesses a substantially trapezoidal slot cross-section, the openings in the slot sieve widening in the radial direction.

10. Device according to Claim 1,
characterised in that the counterpressure member is arranged rotatably about the longitudinal axis of the substantially cylindrical screw conveyor device.

11. Device according to Claim 10,
characterised in that the counterpressure member is a flap which can be pretensioned against the first end face of the screw conveyor device and is fastened to be pivotable in the direction away from the end face.

12. Device according to Claim 10,
characterised in that the counterpressure member is a pressure cone which can be pushed into the screw conveyor device from the direction of the first end face.

13. Device according to Claim 12,
characterised in that the pressure cone is displaceable in the axial direction of the screw conveyor device after overcoming an adjustable pretensioning force.

14. Device according to Claim 12,
characterised in that the pressure cone is controllable as a function of motor pressure.

15. Device according to Claim 14,
characterised in that the pressure cone is connected to a hydraulically or pneumatically operable stroke cylinder.

16. Method for the removal of water from waste materials in a screw conveyor device comprising the following steps:
- introduction of the waste materials transported with water on a first region of the screw conveyor device (10);
- collection of the waste materials on a slot sieve (22);
- transport of the waste materials in the axial direction of the screw conveyor device (10) by means of the rotary movement of the screw (24) with simultaneous removal of water from the waste materials;
- compression and removal of water from the waste materials in the screw conveyor device (10); and
- discharge of the waste materials into a disposal container,
characterised in that
- the waste materials are collected on a slot sieve (22) having a large mesh size;
- the transport of the waste materials in the axial direction of the screw conveyor device (10) ensues first of all in a region of the screw (24) having a large pitch in the screw helix with simultaneous removal of water from the waste materials and subsequently in a second region of the screw conveyor device (10) having a small pitch in the screw helix and a small mesh size in the slot sieve (22); and
- the waste materials are conveyed into a compression part which is not penetrated by the screw.

## Revendications

1. Dispositif pour enlever les déchets de l'eau, avec un dispositif de transport à vis (10), comprenant :
- une vis (24) qui comporte par zone des pas d'enroulement différents; et
- qui est montée flottante; et
- est entourée complètement ou partiellement par un tamis à fentes (22);
- un élément de contre-pression (50), disposé sur une première face frontale du dispositif transporteur à vis à forme sensiblement cylindrique, du côté sortie des déchets venant du dispositif transporteur à vis;
caractérisé en ce que
- le tamis à fentes (22) présente par zones des largeurs de maille différentes; les largeurs de maille étant plus grandes dans la zone dans laquelle les pas d'enroulement sont plus grands; et
- un dispositif d'entraînement (30) destiné à la vis est disposé à proximité d'une deuxième face frontale du dispositif transporteur à vis.

2. Dispositif selon la revendication 1, caractérisé en ce que le dispositif transporteur à vis (3) comprend des zones, disposées les unes après les autres dans la direction du transport des déchets :
- une zone de filtrage dans laquelle le tamis à fente a une grande largeur de maille;
- une zone de pré-pressage dans laquelle le tamis à fentes a une plus petite largeur de maille; et
- une partie de pressage située à proximité de l'élément de contre-pression.

3. Dispositif selon la revendication 2, caractérisé en ce que le pas d'enroulement de la vis dans la zone de pré-pressage est inférieure au pas d'enroulement de la vis dans la zone de filtrage.

4. Dispositif selon la revendication 2 ou 3, caractérisé en ce que, dans la zone de filtrage, le tamis à fentes entoure la vis seulement partiellement et, dans la zone de pré-pressage, il entoure la vis complètement.

5. Dispositif selon la revendication 2, 3 ou 4, caractérisé en ce que, dans la région de la zone de filtrage, la vis est réalisée complètement ou partiellement sans noyau, sous forme d'enroulement sans arbre de vis.

6. Dispositif selon la revendication 1, caractérisé en ce que l'arbre de la vis est susceptible d'être enfiché dans un élément de logement qui est mis en relation de transmission de couple avec le dispositif d'entraînement.

7. Dispositif selon la revendication 6, caractérisé en ce que la vis est réalisée de façon à pouvoir être enlevée manuellement de la première face frontale.

8. Dispositif selon la revendication 1, caractérisé en ce que la vis est complètement enveloppée par le tamis à fentes et l'élément de contre-pression, l'eau chargée par les déchets pouvant être introduite au moyen d'une tubulure sur la surface d'enveloppe du dispositif transporteur à vis.

9. Dispositif selon la revendication 1, caractérisé en ce que le tamis à fentes présente une section transversale d'interstice de forme sensiblement trapézoïdale, les ouvertures du tamis à fentes allant en s'élargissant en allant dans la direction radiale.

10. Dispositif selon la revendication 1, caractérisé en ce que l'élément de contre-pression est disposé de façon à pouvoir tourner autour de l'axe longitudinal du dispositif transporteur à vis à forme sensiblement cylindrique.

11. Dispositif selon la revendication 10, caractérisé en ce que l'élément de contre-pression est un clapet qui peut être précontraint contre la première face frontale du dispositif transporteur à vis et est fixé de façon à s'écarter de la face frontale par un mouvement de pivotement.

12. Dispositif selon la revendication 10, caractérisé en ce que l'élément de contre-pression est un cône de pressage, qui est susceptible d'être inséré dans le dispositif transporteur à vis, depuis la première face frontale.

13. Dispositif selon la revendication 12, caractérisé en ce que le cône de pressage est déplaçable dans la direction axiale du dispositif transporteur à vis, après avoir surmonté une force de précontrainte réglable.

14. Dispositif selon la revendication 12, caractérisé en ce que le cône de pressage peut être commandé en fonction de la pression, de façon motorisée.

15. Dispositif selon la revendication 14, caractérisé en ce que le cône de pressage est relié à un vérin, actionnable hydrauliquement ou pneumatiquement.

16. Procédé de séchage de déchets dans un dispositif transporteur à vis,
comprenant les étapes ci-après :
- introduction des déchets transportés avec l'eau sur une première zone du dispositif transporteur à vis (10);
- captage des déchets sur un tamis à fentes (22);
- transport des déchets en direction axiale du dispositif transporteur à vis (10), par le mouvement rotatif de la vis (24), avec séchage simultané des déchets;
- compression et séchage des déchets dans le dispositif transporteur à vis (10); et
- évacuation des déchets dans un récipient d'élimination;
caractérisé en ce que,
- les déchets sont captés sur un tamis à fentes (22) ayant une grande largeur de maille;
- le transport des déchets en direction axiale du dispositif transporteur à vis (10) s'effectue, d'abord, dans une zone de la vis (24) dans laquelle le pas de l'enroulement de vis est grand avec séchage simultané des déchets et, ensuite, dans une deuxième zone du dispositif transporteur à vis (10), dans laquelle le pas de l'enroulement de vis est plus petit et la largeur du tamis à vis (22) est plus petite; et
- les déchets sont transportés dans une partie de pressage qui n'est pas traversée par la vis.
